# EUROPEAN PATENT APPLICATION

(11) **EP 4 151 643 A1**
(43) Date of publication of application: **22.03.2023**
(21) Application number: 21197104.9
(22) Date of filing: 16.09.2021
(51) Int. Cl.: C07F 9/32, C07F 9/6506

(54) **IMPROVED PROCESS FOR PRODUCTION OF PHOSPHOESTERS OF GLUFOSINATE PRECURSORS**

(71) Applicant: Evonik Operations GmbH, 45128 Essen (DE)
(72) Inventor: LAUTENSCHÜTZ, Ludger, 63454 Hanau (DE); BRAUNE, Sascha, 2180 Antwerpen (BE); PÖTTER, Markus, 48155 Münster (DE)
(74) Representative: Evonik Patent Association

(57) **Abstract**

**Summary**

The present invention relates to a method for production of a compound according to formula (I): 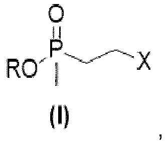 wherein R is alkyl, aryl, alkaryl, aralkyl,
and wherein X is selected from the following structures **(I-A), (I-B):** 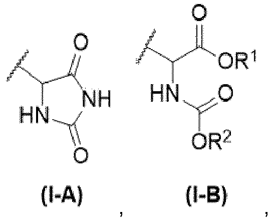 wherein R¹, R² are independently selected from the group consisting of alkyl, aryl, alkaryl, aralkyl.

The compounds according to formula (I) are important precursors in the synthesis of glufosinate, in particular L-glufosinate. In the method according to the present invention, easily accessible starting materials are employed. Thus, the method overcomes the disadvantages of prior art syntheses of L-glufosinate and its intermediates.

## Description

The present invention relates to a method for production of a compound according to formula **(I):** 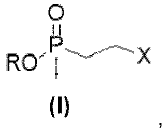
wherein R is alkyl, aryl, alkaryl, aralkyl,
and wherein X is selected from the following structures **(I-A), (I-B):** 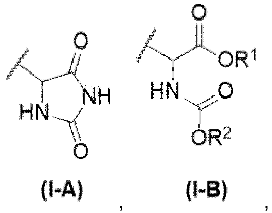
wherein R¹, R² are independently selected from the group consisting of alkyl, aryl, alkaryl, aralkyl.

The compounds according to formula **(I)** are important precursors in the synthesis of glufosinate, in particular L-glufosinate. In the method according to the present invention, easily accessible starting materials are employed. Thus, the method overcomes the disadvantages of prior art syntheses of L-glufosinate and its intermediates.

### 1. Background of the Invention

### 1.1 Glufosinate

Organic phosphor compounds, i.e. chemical agents comprising a carbon-phosphor bond, are widely applied as herbicides in the area of plant protection. Agents such as the herbicides glyphosate (Roundup^{®}, Touchdown^{®}) and glufosinate (Basta^{®}, Liberty^{®}) as well as the growth regulator glyphosine (Polaris^{®}) are used for this purpose (as described for example by G. Hörlein, Rev. Environ. Contam. Toxicol. 1994, 138, 73-145).

Glufosinate forms two enantiomers, L-glufosinate ("LGA"; CAS-No: 35597-44-5) and D-glufosinate ("DGA"; CAS-No.: 73679-07-9):

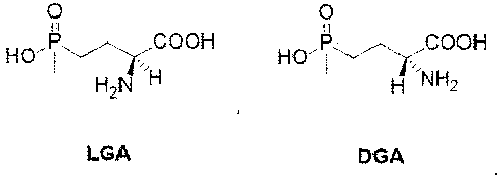

As there is no herbicidal activity of the D-enantiomer, L-glufosinate is the enantiomer of economic interest, and enantioselective pathways that lead to LGA are of high economic relevance. In principle, LGA can be obtained through enzymatic or chemical-synthetic routes.

### 1.2 Enzymatic Routes

For example, the following enzymatic pathways are described in the art:
WO 2017/151573 A1 discloses a two-step enzymatic synthesis of L-glufosinate from D-glufosinate. In the first step, DGA is oxidatively deaminated to give 2-oxo-4-[hydroxy(methyl)phosphinoyl]butyric acid ("PPO"), followed by the specific amination of PPO to L-glufosinate as the second step. The first step is carried out by the catalysis of a D-amino acid oxidase, the second step is catalyzed by a transaminase.
WO 2020/051188 A1 discloses a similar method of converting racemic glufosinate to the L-glufosinate enantiomer. In addition, it discloses a step in which the α-ketoacid or ketone byproduct formed during amination of PPO with an amine donor is converted by ketoglutarate decarboxylase to further shift the equilibrium to L-glufosinate.
WO 2019/018406 A1 discloses a method of purifying L-glufosinate from a mixture comprising L-glufosinate and glutamate. Glutamate is converted to pyroglutamate enzymatically by glutaminyl-peptidyl cyclotransferase, and LGA is then purified from the resulting mixture by ion-exchange.

### 1.3 Chemical Routes

The esters of P-methyl phosphinic acid (for example, P-methyl phosphinic acid butyl ester; "MPBE"; CAS-No: 6172-80-1) have a key role as synthetic building blocks in the synthesis of glufosinate, and especially LGA. These esters are accessible via two fundamental synthetic pathways (summarized in Figures 3 a and 3 b, p. 130, of the article of K. Haack, Chem. Unserer Zeit 2003, 37, 128-138):
a. Reacting diethyl chlorophosphite [CIP(OC₂H₅)₂] with CH₃MgCl provides methyl diethoxy phosphine [H₃CP(OC₂H₅)₂; "DEMP"; CAS-No. 15715-41-0], which is partially hydrolyzed to give the corresponding *P*-methyl phosphinic acid ethyl ester (MPEE; CAS-Nr: 16391-07-4).
b. Alternatively, methane can be reacted with phosphor trichloride at 500 °C to give methyl dichloro phosphane H₃CPCl₂. The latter can then be solvolyzed in alcohols to give the corresponding *P*-methyl phosphinic acid esters.

The esters of *P*-methyl phosphinic acid add to carbon-carbon double bonds regioselectively. This property is used in the synthesis of glufosinate for the formation of the second phosphor-carbon bond. For example, H₃CPH(O)OR (R = Alkyl) reacts with 1-cyano allyl acetate in an addition reaction to provide an intermediate. Subsequent exchange of the acetate substituent with ammonia and hydrolysis of the cyano group and the ester group of the phosphinic acid moiety give glufosinate.

Acrylic acid ester is a cheaper alternative starting material. It can react with the ester of *P*-methyl phosphinic acid to 3-[alkoxy(methyl)phosphinyl]propionic acid alkyl ester. Claisen reaction of this diester with diethy oxalate, hydrolysis and decarboxylation provide the corresponding α-keto acid, which can be reductively aminated to give glufosinate.

A general challenge for these organo-synthetic routes is that the glufosinate is usually obtained as a racemic mixture.

To tackle this disadvantage, synthetic routes towards L-glufosinate were described in the art, e.g. in WO 1999/009039 A1, EP 0 508 296 A1.

WO 2020/145513 A1 and WO 2020/145514 A1 describe a chemical route to L-glufosinate. In this route, a homoserine derivative such as O-acetyl homoserine or O-succinyl homoserine is used as starting material, and L-glufosinate is obtained by a sequence of reactions including lactonization and halogenation.

WO 2020/145627 A1 describes a similar route, wherein, during halogenation, a bromine derivative is obtained.

The route disclosed by CN 106083922 A is similar but starts from L-methionine.

CN 108516991 A describes another synthetic pathway to L-glufosinate, starting with the azeotropic dehydration of L-homoserine to give L-3,6-bis(2-haloethyl)-2,5-diketopiperazine (corresponding to the compound DKP-Y shown below, in which Y = halogen), followed by the introduction of two methyl phosphinate ester groups and hydrolysis.

CN 111662326 A describes a synthetic route for L-glufosinate ammonium starting from L-homoserine. In this route, 3,6-bis(2-hydroxyethyl)piperazine-2,5-dione ("DKP"; CAS-Nr.: 50975-79-6) is formed and reacted with methyl phosphine dichloride to give the disubstituted methyl phosphine. This is followed by an Arbuzov reaction and subsequent hydrolysis to give LGA.

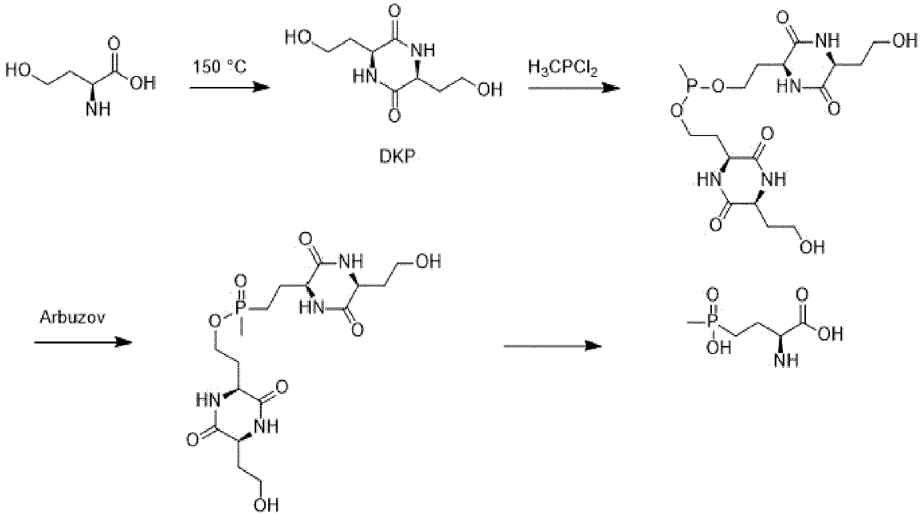

CN 111662325 A discloses an analogous route in which a hydantoin derivative of homoserine is reacted with H₃CPCl₂.

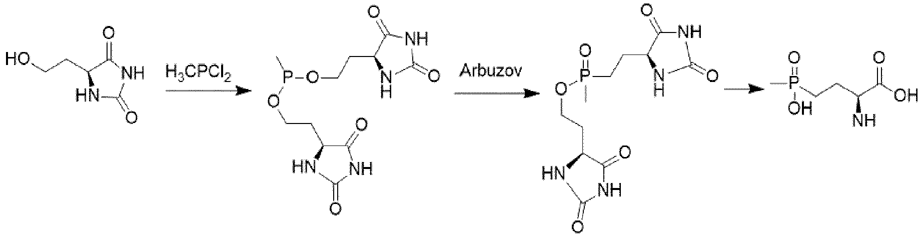

Both routes have the inherent disadvantage that homoserine starting material is added in high excess and has to be recovered from the reaction mixture.

CN 108484666 A describes a similar method in which instead of the hydroxy function of DKP, a DKP derivative with a substituent "Y" ("DKP-Y") is used and reacted with the *P*-methyl phosphinic acid butyl ester ("MPBE"; R* = *n*-butyl in the following scheme):

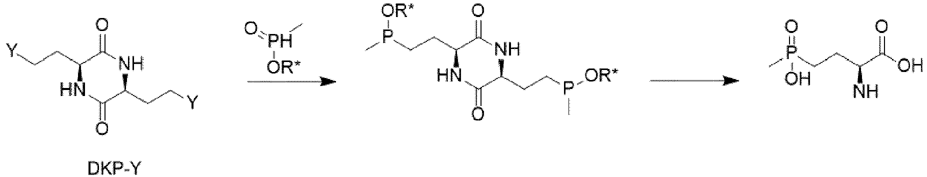

According to the disclosure of CN 108484666 A, Y may be selected from CI, Br, I.

CN 108484666 A further describes that Y may also be -OSO₂CH₃, in which case DKP-Y is a mesylate ester. With regard to this mesylate ester, the following problems were observed by the present inventors: While DKP-Y in which Y = halogen is readily obtained from L-homoserine by a procedure as described for example in CN 108516991 A and paragraph [0191], page 18, of US 2013/0006014 A1, the analogous reaction to obtain DKP-Y in which Y = -OSO₂CH₃ could not be reproduced. In fact, the inventors of the present invention found that the reaction of DKP with CISO₂CH₃ does not lead to the desired mesylate ester, as suggested by CN 108484666 A, but produces a tricyclic byproduct with the following structure:

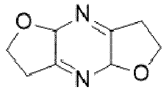

These findings suggest that for Y = -OSO₂CH₃, DKP-Y undergoes intramolecular nucleophilic substitution reactions. In conclusion, the method according to CN 108484666 A only could be worked in those cases in which Y = CI, Br, J in the starting material DKP-Y. However, for those cases in which Y = -OSO₂CH₃, the respective starting material DKP-Y was not readily available and the reactions to obtain this starting material is prone to side reactions.

This essentially means that the synthesis of glufosinate disclosed in CN 108484666 A requires the route via the halogen intermediate (DKP-Y). However, the introduction of halogen into DKP to arrive at DKP-Y requires the handling of thionyl halides or similar compounds. It is generally desirable to avoid introduction of halogens as leaving groups in the substrate and the use of halogen containing reactants. Also, when halogen groups leave the substrate, this results in solutions with halogen ions. This is not desirable due to their corrosiveness and the fact that halogen ions are difficult to recycle. Therefore, waste containing the respective halides is difficult to handle and its treatment is costly.

The problem of the present invention therefore was to provide an improved method for synthesis of the above compound **(I)** which avoids the described disadvantages, in particular does not require the introduction of a halogen group as a leaving group into the substrate and overcomes the unexpected difficulties of the method of CN 108484666 A. In particular, the improved synthesis should preserve the chiral configuration of the starting material, i.e. the chiral information at a stereocenter of the starting material should not get lost during the method.

### 2. Summary of the Invention

The above-mentioned problem is solved by the method according to the present invention. The method is for production of compounds according to formula **(I):** 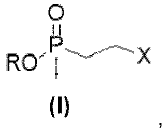
wherein R is alkyl, aryl, alkaryl, aralkyl,
preferably R is alkyl or aryl, more preferably R is alkyl, more preferably R is alkyl with 1 to 10 carbon atoms, even more preferably R is alkyl with 1 to 6 carbon atoms, even more preferably R is alkyl with 1 to 4 carbon atoms, even more preferably R is methyl, ethyl, or n-butyl, even more preferably R is ethyl or *n*-butyl.
and wherein X is selected from the following structures **(I-A), (I-B),** 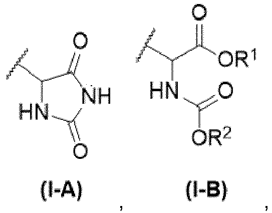
wherein R¹, R² are independently selected from the group consisting of alkyl, aryl, alkaryl, aralkyl,
more preferably R¹, R² are independently selected from the group consisting of alkyl, aryl,
more preferably R¹, R² are independently selected from alkyl,
even more preferably R¹, R² are independently selected from alkyl with 1 to 10 carbon atoms,
even more preferably R¹, R² are independently selected from alkyl with 1 to 6 carbon atoms,
even more preferably R¹, R² are independently selected from alkyl with 1 to 4 carbon atoms,
even more preferably, R¹ = Methyl, R² = *tert*-Butyl.

In a preferred embodiment of the present invention, **(I-A)** has a configuration according to the following structure **(I-A)_{L},** and **(IV-B)** has a configuration according to the following structure **(I-B)_{L},** wherein R¹, R² have the meaning as set forth for **(IV-B):**

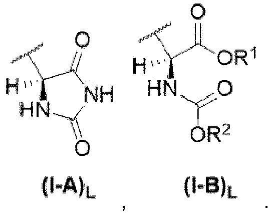

The method according to the present invention comprises two steps (i) and (ii).

In step (i), a compound according to formula **(III)** is reacted to give a compound according to formula **(II):** 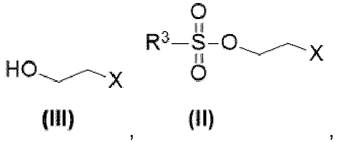 wherein R³ is alkyl, aryl, alkaryl, aralkyl, haloalkyl, preferably R³ is alkyl, haloalkyl, aryl, or alkaryl, preferably alkyl, haloalkyl, phenyl, alkaryl, more preferably alkyl with 1 to 10 carbon atoms, haloalkyl with 1 to 10 carbon atoms, phenyl, alkaryl with 1 to 10 carbon atoms, more preferably methyl, trifluoromethyl, tolyl, more preferably methyl, tolyl, most preferably methyl.

In a second step (ii), the compound according to formula **(II)** is reacted with a compound **(IV),** wherein the compound according to formula **(IV)** has a structure according to formula **(IV-A)** or formula **(IV-B),** to give a compound according to formula **(I):**

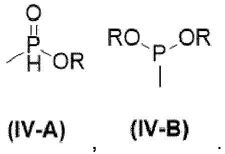

### 3. Detailed Description of the Invention

### 3.1 General terms

In the context of the invention, an "alkyl" (or "alkyl group") is a monovalent saturated hydrocarbyl radical of the general chemical structure **(a)** with

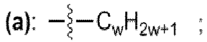

The chain of carbon atoms "-C_{w}H_{2w+1}" may be linear, in which case the group is an unbranched alkyl group. Alternatively, it may have branches, in which case it is a branched alkyl group.

The alkyl group in the context of the present invention is preferably an alkyl group having 1 to 30 carbon atoms, more preferably 1 to 29 carbon atoms, more preferably 1 to 12 carbon atoms, more preferably 1 to 10 carbon atoms, more preferably 1 to 8 carbon atoms, more preferably 1 to 6 carbon atoms, more preferably 1 to 4 carbon atoms.

w in the chemical structure **(a)** is an integer. w in an alkyl group having 1 to 30 carbon atoms is selected from the range of 1 to 30. w in an alkyl group having 1 to 29 carbon atoms is selected from the range of 1 to 29. w in an alkyl group having 1 to 12 carbon atoms is selected from the range of 1 to 12. w in an alkyl group having 1 to 10 carbon atoms is selected from the range of 1 to 10. w in an alkyl group having 1 to 8 carbon atoms is selected from the range of 1 to 8. w in an alkyl group having 1 to 6 carbon atoms is selected from the range of 1 to 6, w in an alkyl group having 1 to 4 carbon atoms is selected from the range of 1 to 4.

In the context of the invention, an "alkyl group having 1 to 30 carbon atoms" is especially selected from methyl, ethyl, *n-*propyl*, iso*-propyl, *n-*butyl*, sec-*butyl, *iso*-butyl, *tert*-butyl, *n-*pentyl, 1-methylbutyl, 2-methylbutyl, 3-methylbutyl, 1,1-dimethylpropyl, 1,2-dimethylpropyl, 2,2-dimethylpropyl, 1-ethylpropyl, *n-*hexyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, ***n-heptyl, n-octyl, n-nonyl,** n-*decyl*, n-*undecyl*, n-*dodecyl*, n-*tridecyl*, n-*tetradecyl*, n-*pentadecyl*, n-*hexadecyl*, n*-heptadecyl, *n*-octadecyl, *n*-nonadecyl, *n*-eicosyl, *n*-heneicosyl, *n*-docosyl, *n*-tricosyl, *n*-tetracosyl, *n*-pentacosyl, *n*-hexacosyl, *n*-heptacosyl, *n*-octacosyl, *n*-nonacosyl, *n*-triacontyl.

In the context of the invention, an "alkyl group having 1 to 12 carbon atoms" is especially selected from the group consisting of methyl, ethyl, *n*-propyl, *iso*-propyl, *n*-butyl, *sec*-butyl, *iso*-butyl, *tert*-butyl, *n*-pentyl, 1-methylbutyl, 2-methylbutyl, 3-methylbutyl, 1,1-dimethylpropyl, 1,2-dimethylpropyl, 2,2-dimethylpropyl, 1-ethylpropyl, *n*-hexyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, *n*-heptyl, *n*-octyl, *n*-nonyl, *n*-decyl, *n*-undecyl, *n*-dodecyl.

In the context of the invention, an "alkyl group having 1 to 10 carbon atoms" is especially selected from the group consisting of methyl, ethyl, *n*-propyl, *iso*-propyl, *n*-butyl, *sec*-butyl, *iso*-butyl, *tert-*butyl, *n*-pentyl, 1-methylbutyl, 2-methylbutyl, 3-methylbutyl, 1,1-dimethylpropyl, 1,2-dimethylpropyl, 2,2-dimethylpropyl, 1-ethylpropyl, *n*-hexyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, *n*-heptyl, n-octyl, *n*-nonyl, n-decyl.

In the context of the invention, an "alkyl group having 1 to 8 carbon atoms" is especially selected from the group consisting of methyl, ethyl, *n*-propyl, *iso*-propyl, *n*-butyl, *sec*-butyl, *iso*-butyl, *tert-*butyl, *n*-pentyl, 1-methylbutyl, 2-methylbutyl, 3-methylbutyl, 1,1-dimethylpropyl, 1,2-dimethylpropyl, 2,2-dimethylpropyl, 1-ethylpropyl, *n*-hexyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, *n*-heptyl, n-octyl.

In the context of the invention, an "alkyl group having 1 to 6 carbon atoms" is especially selected from the group consisting of methyl, ethyl, *n*-propyl, *iso*-propyl, *n*-butyl, *sec*-butyl, *iso*-butyl, *tert*-butyl, *n*-pentyl, 1-methylbutyl, 2-methylbutyl, 3-methylbutyl, 1,1-dimethylpropyl, 1,2-dimethylpropyl, 2,2-dimethylpropyl, 1-ethylpropyl, *n*-hexyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl.

In the context of the invention, an "alkyl group having 1 to 4 carbon atoms" is especially selected from the group consisting of methyl, ethyl, *n*-propyl, *iso*-propyl, *n*-butyl, *sec*-butyl, *iso*-butyl, *tert*-butyl.

In the context of the invention, an "aryl" (or "aryl group") is a monovalent hydrocarbyl radical in which all the carbon atoms lie within an aromatic system. In the context of the invention, an "aryl group" is especially selected from the group consisting of phenyl, naphthyl, anthracenyl, more preferably selected from the group consisting of phenyl, naphthyl, most preferably phenyl.

In the context of the invention, an "alkaryl" (or "alkaryl group") is a monovalent hydrocarbyl radical in which some of the carbon atoms lie within an aromatic system and the rest forms an alkyl group, whereas the connection to the alkaryl group is via an aromatic carbon atom. An alkaryl group can be formally obtained by substituting at least one hydrogen radical of an aryl group by an alkyl group.

In the context of the invention, an "alkaryl group" is especially selected from the group consisting of alkylphenyl, dialkylphenyl, trialkylphenyl, more preferably selected from alkylphenyl, even more preferably selected from tolyl, most preferably p-tolyl.

In the context of the invention, an "aralkyl" (or "aralkyl group") is a monovalent hydrocarbyl radical in which some of the carbon atoms lie within an aromatic system and the rest forms an alkyl group, whereas the connection to the aralkyl group is via a non-aromatic carbon atom. An aralkyl group can be formally obtained by substituting at least one hydrogen radical of an alkyl group by an aryl group.

In the context of the invention, an "aralkyl group" is especially selected from the group consisting of phenylalkyl, more preferably benzyl, phenylethyl, most preferably benzyl.

In the context of the invention, a "haloalkyl" (or "haloalkyl group") is a monovalent saturated hydrocarbyl radical which can be formally obtained by substituting at least one hydrogen radical of an alkyl group by a halogen radical, preferably fluorine or chlorine radical, most preferably fluorine. A preferred haloalkyl radical is the trifluoromethyl radical.

The following abbreviations are used in the literature and in the context of this invention:

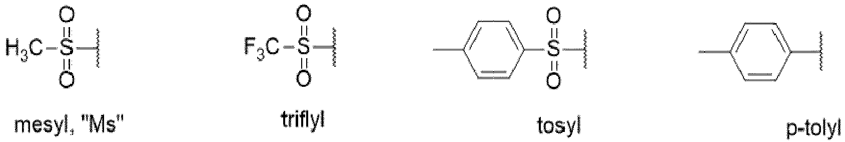

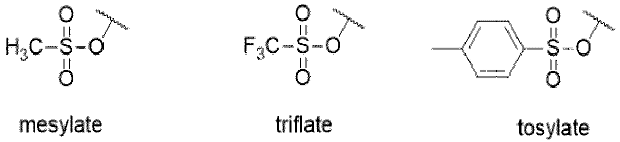

"BOC" means "*tert*-butyloxycarbonyl" [(CH₃)₃C-O-C(=O)∼].

### 3.2 Step (i)

In step (i) of the method according to the present invention, a compound according to formula **(III)** is reacted to give a compound according to formula **(II),** wherein 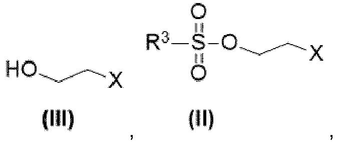 wherein R³ is alkyl, aryl, alkaryl, aralkyl, haloalkyl, preferably R³ is alkyl, haloalkyl, aryl, or alkaryl, preferably alkyl, haloalkyl, phenyl, alkaryl, more preferably alkyl with 1 to 10 carbon atoms, haloalkyl with 1 to 10 carbon atoms, phenyl, alkaryl with 7 to 10 carbon atoms, more preferably methyl, trifluoromethyl, *p*-tolyl, more preferably methyl, *p*-tolyl, most preferably methyl.

X is selected from the following structures **(I-A), (I-B),** more preferably X = **(I-A),** 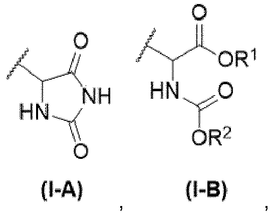
wherein R¹, R² are independently selected from the group consisting of alkyl, aryl, alkaryl, aralkyl,
more preferably R¹, R² are independently selected from the group consisting of alkyl, aryl,
more preferably R¹, R² are independently selected from alkyl,
even more preferably R¹, R² are independently selected from alkyl with 1 to 10 carbon atoms,
even more preferably R¹, R² are independently selected from alkyl with 1 to 6 carbon atoms.

Even more preferably, R¹ is selected from the group consisting of methyl, ethyl, *n*-propyl, *iso*-propyl, *n*-butyl, *sec*-butyl, *tert*-butyl, pentyl, hexyl, and R² is selected from methyl, ethyl, *n*-propyl, *iso*-propyl, *n*-butyl, *sec*-butyl, *tert*-butyl.

Even more preferably, R¹ is selected from the group consisting of methyl, ethyl, *n*-propyl, *iso-*propyl, n-butyl, *sec*-butyl, *tert*-butyl, pentyl, hexyl, and R² = methyl, ethyl, *tert*-butyl.

Even more preferably, R¹ is selected from the group consisting of methyl, ethyl, and R² = methyl, ethyl, *tert*-butyl.

More preferably, R¹ = methyl, ethyl, preferably methyl, and R² = *tert*-butyl, methyl, ethyl.

Most preferably, R¹ = methyl, and R² = *tert*-butyl.

In an alternative preferred embodiment, R¹ = methyl, ethyl and R² = methyl, ethyl.

The reaction conditions in step (i) may be applied by the skilled person according to his general knowledge. Step (i) essentially is the esterification of the -OH group of the compound according to formula **(III)** as a sulfonic ester derivative, thus converting -OH into a leaving group.

In particular, step (i) is carried out by reacting the compound according to formula **(III)** with a compound according to one of formulae **(XI), (XII),** wherein **(XI)** is preferred:

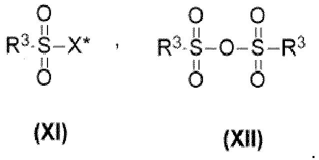

In formulae **(XI), (XII),** R³ has the same meaning as in formula **(II),** and X* is a halogen, preferably selected from Br, J, Cl, more preferably Br, Cl, most preferably X* = Cl. "J" means iodine.

Step (i) is in particular carried out in a reaction mixture. In particular, the reaction mixture comprises the starting materials and the products of step (i) and even more preferably also a base **B1.** Optionally, the reaction mixture also comprises an organic solvent.

In particular, in step (i), the compounds according to one of formulae **(XI), (XII)** and the compound according to formula **(III)** are employed in step (i) in an amount so that the molar ratio of all compounds according to formula **(III)** employed in step (i) to all compounds according to formulae **(XI), (XII)** employed in step (i) is in the range of 1 : 0.1 to 1 : 10, preferably 1 : 0.9 to 1 : 6, in particular 1 to 0.99 to 1 to 2, in particular 1 : 1.1 to 1 : 1.5.

The skilled person is aware that the compounds according to formulae **(XI), (XII)** hydrolyze in the presence of water. Therefore, it is preferred that the overall content of water in the reaction mixture in step (i) is below 1 weight-% based on the sum of the weights of all compounds according to formulae **(XI), (XII)** employed in step (i), preferably below 0.5 weight-%, more preferably below 0.1 weight-%, even more preferably below 0.01 weight-%, even more preferably below 0.001 weight-%, even more preferably below 0.1 ppm (weight) based on the sum of the weights of all compounds according to formulae **(XI), (XII)** employed in step (i).

Step (i) may be carried out in the presence of an organic solvent or in the absence of an organic solvent.

"Absence of an organic solvent" means particularly that the overall content of all organic solvents in the reaction mixture in step (i) is below 10 weight-% based on the sum of the weights of all compounds **(III)** employed in step (i), preferably below 5 weight-%, more preferably below 1 weight-%, even more preferably below 0.1 weight-%, even more preferably below 0.01 weight-%, even more preferably below 1 ppm (weight) based on the sum of the weights of all compounds according to formulae **(III)** employed in step (i).

In case step (i) is carried out in the presence of an organic solvent, the reaction mixture in step (i) comprises the organic solvent.

In this embodiment, the skilled person may choose the organic solvent according to his knowledge.

If step (i) is carried out in the presence of an organic solvent, then, preferably, aprotic organic solvents are used.

Preferably, the organic solvent in the reaction mixture of step (i) is then selected from the group consisting of
- aliphatic solvents, preferably pentane, hexane, heptane, octane, decane, cyclohexane, tetramethylsilane;
- aromatic solvents, preferably benzene, toluene, xylene;
- ether compounds, preferably tetrahydrofuran (= "THF"), methyltetrahydrofuran, diethyl ether, dipropyl ether, dibutyl ether, methyl *tert*-butyl ether, ethylene glycol dimethyl ether (= "diglyme"), 1,4-dioxane, diethylene glycol dimethyl ether;
- halogenated solvents, preferably dichloromethane, chloroform, tetrachloromethane, *N,N*-dimethylformamide (= "DMF") or *N,N*-diethylformamide;
- esters, preferably methyl acetate, ethyl acetate (= "EtOAc"), propyl acetate, butyl acetate;
- acetone;
- dimethyl sulfoxide (= "DMSO").

Especially preferred organic solvents for step (i) are selected from esters, ethers, halogenated solvents, more preferably THF, EtOAc, DMF.

Step (i) is optionally carried out in the presence of a base **B1.**

In case step (i) is carried out in the presence of a base **B1,** the reaction mixture in step (i) comprises the base **B1.**

Preferably, **B1** is non-nucleophilic, and even more preferably, **B1** is selected from
- alkylamines, which are preferably selected from the group consisting of trimethylamine
   (= "Me3N" or "NMe3"), triethylamine (= "Et₃N" or "NEt₃"), *N,N*-di-*iso*-propyl amine
   (= "DIPEA"), 1,8-Diazabicycloundec-7-ene (= "DBU"); 1,5-Diazabicyclo(4.3.0)non-5-ene
   (= "DBN"), mixtures of NMe₃ and Et₃N;
- aromatic amines, which are preferably selected from the group consisting of pyridine, dialkylpyridine such as 2,6-di-*tert*-butylpyridine;
- phosphazene bases;
- alkali alkyl amides, preferably lithium di-*iso*-propyl amide (= "LDA");
- silicon based amides, preferably selected from the group consisting of sodium bis(trimethylsilyl)amide (= "NaHMDS"), potassium bis(trimethylsilyl)amide (= "LiHMDS");
- lithium tetramethylpiperidine.

More preferably, **B1** is selected from
- alkylamines, which are preferably selected from the group consisting of trimethylamine, triethylamine (= "Et₃N" or "NEt₃"), *N,N*-di-*iso*-propyl amine (= "DIPEA"), mixtures of NMe₃ and Et₃N, 1,8-Diazabicycloundec-7-ene (= "DBU"); 1,5-Diazabicyclo(4.3.0)non-5-ene (= "DBN");
- aromatic amines, which are preferably selected from the group consisting of pyridine, dialkylpyridine such as 2,6-di-*tert*-butylpyridine.

Most preferably, **B1** is selected from trimethylamine, mixtures of NMe₃ and Et₃N (e.g. in a weight ratio of 9 : 1 to 1 : 9, even more preferably in a weight ratio of 1 : 1), Et₃N, pyridine, even more preferably from Et₃N, pyridine.

In case step (i) is carried out in the presence of a base **B1,** the base **B1** is added in an amount so that the molar ratio of all compounds according to formula **(III)** employed in step (i) to all bases **B1** employed in step (i) is in the range of 1 : 0.1 to 1 : 10, preferably 1 : 0.9 to 1 : 6, in particular 1 to 0.99 to 1 to 2, in particular 1 : 1.1 to 1 : 1.5.

Step (i) is preferably carried out at a temperature of below 25 °C, even more preferably below 11 °C, preferably at a temperature in the range of - 10 °C to 10 °C.

This step reflects the surprising effect of the present invention, which lies in that the compound according to formula **(III)** can be used to introduce a leaving group which is different from a "naked halogen". The product of step (i), i.e. the compound according to formula **(II),** can then undergo reaction according to step (ii). By this pathway, the problems of the prior art, i.e. the reaction according to CN 108484666 A, when a sulfonic acid ester derivative is introduced, are overcome.

In this context, it is pointed out that for R³ = haloalkyl (such as triflyl), compound **(II)** does contain halogen. However, the important and decisive difference is that in this case, in step (ii), the "naked" halogen is not the leaving group, but halogen as part of the larger sulfonic ester becomes the leaving group and is therefore "masked". As it is easier to recycle triflate than halogen ions, and halogen ions also have a higher corrosive effect compared to triflate, the described problems inherent to prior art syntheses are resolved.

### 3.3 Step (ii)

In step (ii) of the method according to the present invention, compound **(II)** obtained in step (i) is reacted with a compound **(IV),** wherein the compound according to formula **(IV)** has a structure according to formula **(IV-A)** or formula **(IV-B),** to give a compound according to formula **(I):** 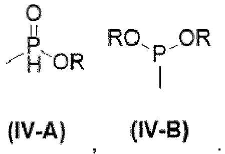
wherein R is alkyl, aryl, alkaryl, aralkyl,
preferably R is alkyl or aryl, more preferably alkyl, more preferably R is alkyl with 1 to 10 carbon atoms, even more preferably R is alkyl with 1 to 6 carbon atoms, even more preferably R is alkyl with 1 to 4 carbon atoms, even more preferably methyl, ethyl, or n-butyl, even more preferably ethyl or *n*-butyl.

A preferred alkyl residue is alkyl with 1 to 10 carbon atoms, even more preferably R is alkyl with 1 to 6 carbon atoms, even more preferably R is alkyl with 1 to 4 carbon atoms, even more preferably methyl, ethyl, or n-butyl, even more preferably ethyl or n-butyl.

A preferred aryl residue is phenyl.

A preferred alkaryl residue is tolyl, even more preferably p-tolyl.

A preferred aralkyl residue is benzyl.

The reaction conditions for step (ii) are known to the skilled person, and are e.g. described in CN 108484666 A.

Step (ii) is in particular carried out in a reaction mixture. In particular, the reaction mixture comprises the starting materials and the products of step (ii) and even more preferably also a base **B2** and/or a catalyst. Optionally, the reaction mixture also comprises an organic solvent.

It is preferred that in step (ii), compound **(II)** is reacted with either a compound according to formula **(IV-A)** or a structure according to formula **(IV-B).**

In particular, in step (ii), the compounds according to formula **(IV)** and the compound according to formula **(II)** are employed in step (ii) in an amount so that the molar ratio of all compounds according to formula **(II)** employed in step (ii) to all compounds according to formula **(IV)** employed in step (ii) is in the range of 1 : 0.1 to 1 : 10, preferably 1 : 0.9 to 1 : 6, in particular 1 : 0.99 to 1 : 3.5, in particular 1 : 1 to 1 : 3, more in particular 1 : 2 to 1 : 3.

The skilled person is aware that the compounds according to formulae **(IV-A), (IV-B)** hydrolyze in the presence of water. Therefore, it is preferred that the overall content of water in the reaction mixture in step (ii) is below 1 weight-% based on the sum of the weights of all compounds according to formulae **(IV-A), (IV-B)** comprised by the reaction mixture in step (ii), preferably below 0.5 weight-%, more preferably below 0.1 weight-%, even more preferably below 0.01 weight-%, even more preferably below 0.001 weight-%, even more preferably below 0.1 ppm (weight) based on the sum of the weights of all compounds according to formulae **(IV-A), (IV-B)** comprised by the reaction mixture in step (ii).

Step (ii) may be carried out in the presence of an organic solvent or in the absence of an organic solvent.

"Absence of an organic solvent" means particularly that the overall content of all organic solvents in the reaction mixture in step (ii) is below 10 weight-% based on the sum of the weights of all compounds (II) employed in step (ii), preferably below 5 weight-%, more preferably below 1 weight-%, even more preferably below 0.1 weight-%, even more preferably below 0.01 weight-%, even more preferably below 1 ppm (weight) based on the sum of the weights of all compounds **(II)** employed in step (ii).

In case step (ii) is carried out in the presence of an organic solvent, the reaction mixture in step (ii) comprises the organic solvent.

In this embodiment, the skilled person may choose the organic solvent according to his knowledge.

If step (ii) is carried out in the presence of an organic solvent, then, preferably, aprotic organic solvents are used.

Preferably, the organic solvent in the reaction mixture of step (ii) is then selected from the group consisting of
- aliphatic solvents, preferably pentane, hexane, heptane, octane, decane, cyclohexane, tetramethylsilane;
- aromatic solvents, preferably benzene, toluene, xylene;
- ether compounds, preferably tetrahydrofuran (= "THF"), methyltetrahydrofuran, diethyl ether, dipropyl ether, dibutyl ether, methyl *tert*-butyl ether, ethylene glycol dimethyl ether (= "diglyme"), 1,4-dioxane, diethylene glycol dimethyl ether;
- halogenated solvents, preferably dichloromethane, chloroform, tetrachloromethane, *N,N*-dimethylformamide (= "DMF") or *N,N*-diethylformamide;
- esters, preferably methyl acetate, ethyl acetate (= "EtOAc"), propyl acetate, butyl acetate;
- acetone;
- dimethyl sulfoxide (= "DMSO").

Especially preferred organic solvents for step (ii) are selected from esters, ethers, halogenated solvents, more preferably THF, EtOAc, DMF.

If step (ii) is carried out in the presence of an organic solvent, then, step (ii) is even more preferably carried out in an organic solvent which is selected from the group consisting of tetrahydrofuran, methyltetrahydrofuran, ethylene glycol dimethyl ether, dioxane, diethylene glycol dimethyl ether, dimethyl sulfoxide, *N,N*-dimethylformamide, *N,N*-diethylformamide, most preferably diglyme.

Optionally, step (ii) is carried out in the presence of a base **B2,** wherein the base **B2** is preferably selected from the group consisting of lithium alkoxide, sodium alkoxide, potassium alkoxide, lithium alkylate, lithium amide, lithium alkylsilyl amide, a hydrogen salt of an alkali metal, a hydrogen salt of an alkaline earth metal, even more preferably selected from the group consisting of lithium amide, lithium alkylsilyl amide, a hydrogen salt of an alkali metal, a hydrogen salt of an alkaline earth metal, even more preferably selected from the group consisting of a hydrogen salt of an alkali metal a hydrogen salt of an alkaline earth metal, even more preferably selected from the group consisting of a hydrogen salt of an alkali metal.

In another preferred embodiment, base **B2** is selected from the group consisting of lithium methoxide, lithium ethoxide, lithium *iso*-propoxide, lithium *tert*-butoxide, sodium methoxide, sodium ethoxide, sodium *iso*-propoxide, potassium methoxide, potassium ethoxide, potassium *iso*-propoxide, potassium *tert*-butoxide, methyl lithium, ethyl lithium, propyl lithium, *iso*-propyl lithium, n-butyl lithium, *tert*-butyl lithium, sec-butyl lithium, 2-(ethylhexyl) lithium, diethylamine lithium, di-*iso*-propylamine lithium, lithium bistrimethylsilylamide, lithium hydride, sodium hydride, potassium hydride or calcium hydride.

More preferably, base **B2** is selected from the group consisting of methyl lithium, ethyl lithium, propyl lithium, *iso*-propyl lithium, n-butyl lithium, *tert*-butyl lithium, sec-butyl lithium, 2-(ethylhexyl) lithium, diethylamine lithium, di-*iso*-propylamine lithium, lithium bistrimethylsilylamide, lithium hydride, sodium hydride, potassium hydride or calcium hydride.

More preferably, base **B2** is selected from the group consisting of diethylamine lithium, di-*iso*-propylamine lithium, lithium bistrimethylsilylamide, lithium hydride, sodium hydride, potassium hydride or calcium hydride.

More preferably, base **B2** is selected from the group consisting of lithium bis(trimethylsilyl)amide (Cas-No.: 4039-32-1), sodium hydride.

Most preferably, base **B2** is sodium hydride.

In case step (ii) is carried out in the presence of a base **B2,** the base **B2** is added in an amount so that the molar ratio of all compounds according to formula **(II)** employed in step (ii) to all bases **B2** employed in step (ii) is in the range of 1 : 0.1 to 1 : 10, preferably 1 : 0.9 to 1 : 6, in particular 1 to 0.99 to 1 to 3.5, in particular 1 : 1.1 to 1 : 3.

Optionally, step (ii) is carried out in the presence of a catalyst. More preferably, the catalyst is selected from the group consisting of alkaline metal halogens, alkaline earth metal halogens, transition metal halogens, ammonium or quaternary ammonium halogene salts, wherein the halogene is preferably bromine or iodine (= "J"), even more preferably bromine.

Even more preferably, the catalyst is selected from the group consisting of lithium halogenide, sodium halogenide, potassium halogenide, magnesium halogenide, cesium halogenide, ammonium halogenide, tetramethylammonium halogenide, tetraethylammonium halogenide, tetra-n-propylammonium halogenide, tetra-n-butyl ammonium halogenide, tetra-n-hexyl ammonium halogenide, benzyltrimethylammonium halogenide or benzyltriethylammonium halogenide, wherein the halogenide is iodide or bromide, preferably bromide.

Even more preferably, the catalyst is selected from LiBr, MgBr₂.

In particular, if a catalyst is used in step (ii), the catalyst is added in an amount to the reaction mixture of step (ii) that the molar ratio of all compounds according to formula (II) employed step (ii) to all catalysts employed in step (ii) is in the range of 1 : 0.01 to 1 : 2, preferably 1 : 0.1 to 1 : 1.1, in particular 1 : 0.2 to 1 : 0.5, in particular 1 : 0.2.

Preferably, step (ii) is carried out at a temperature of -5 °C to 180 °C, even more preferably 0 °C to 160 °C.

In those embodiments wherein the compound according to formula **(IV)** has a structure according to formula **(IV-A),** the preferred temperature in step (ii) is 0 °C to 50 °C, even more preferably 25 °C.

In those embodiments wherein the compound according to formula **(IV)** has a structure according to formula **(IV-B),** the preferred temperature in step (ii) is 120 °C to 160 °C, even more preferably 140 °C.

The step (ii) further preferably includes the step of purifying the compound of the formula **(I),** specifically comprising: removing the organic solvent by filtering the reaction solution, adding the residue to water and an extractant for extraction, and removing the extracting agent to give a compound of the formula **(I).**

The extracting agent is selected from the group consisting of dichloromethane, dichloroethane, chloroform, carbon tetrachloride, benzene, toluene, xylene, ethyl acetate, butyl acetate, *tert*-butyl acetate, diethyl ether, di-*iso*-propyl ether, methyl *tert*-butyl ether or n-butyl ether.

### 3.4 Optional Step (iii)

In an optional step (iii), the compound **(I)** obtained in step (ii) is reacted to give glufosinate, in particular L-glufosinate. The necessary conditions are known to the skilled person.

The reaction in step (iii) may be carried out enzymatically or chemically.

In case it is carried out chemically, the obtained compound **(I)** is subjected to acidic or basic conditions, preferably saponified.

### 3.5 L-enantioselective method

In the method according to the invention, it is preferred that **(IV-A)** has a configuration according to the following structure **(I-A)_{L},** and that **(IV-B)** has a configuration according to the following structure **(I-B)_{L}:**

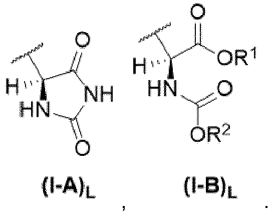

In this preferred embodiment, it is possible to synthesize LGA from L-homoserine enantioselectively, thereby providing a route to the enantiomer with the higher economic relevance.

### 3.6 Results

The present invention provides an organosynthetic route to the target molecule **(I),** wherein the introduction and substitution of halogen functions in the target molecule is avoided. In particular, by using compound **(III)** as starting material, it becomes possible to avoid the substitution of OH with halogen by introduction of a leaving group based on sulfonyl acid derivative such as tosyl, triflyl, mesyl etc. The introduction of these groups was not possible in prior art (CN 108484666 A) syntheses, in which starting materials such as DKP are used.

### 4. Examples

3,6-bis(2-hydroxyethyl)piperazine-2,5-dione ("DKP"; CAS-Nr.: 50975-79-6) was synthesized as described in Example 1 of US 2018/0194804 A1, wherein instead of 40.2 mol methionine, an equimolar amount of L-homoserine was used.

Further synthesis methods are described in paragraph [0189], page 18, of US 2013/0006014 A1 and paragraph 3.1.3, page 3651, scheme 20 of the review of A.D. Borthwick, Chem. Rev. 2012, 112, 3641-3716.

L-Homoserine hydantoin, i.e. the starting material with the following structure: 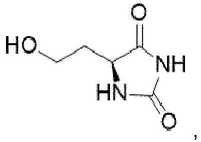 may be obtained from L-homoserine by the procedure described in CN 111662325 A.

E. Ware, Chem. Rev. 1950, 46, 403-470 and C. Avendaño & J. C. Menendez, "Hydantoin and its derivates" in Kirk-Othmer Encyclopedia of Chemical Technology 2000 give a general overview over hydantoin chemistry.

### 4.1 Comparative Examples C1 to C5: reaction of DKP with CISO₂CH₃

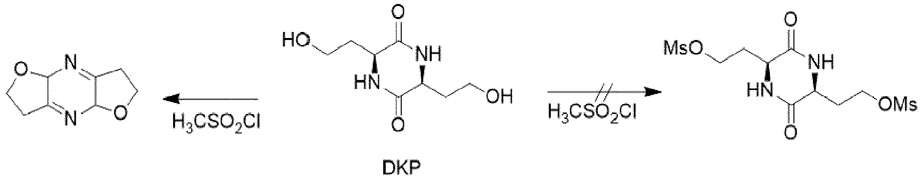

### 4.1.1 Comparative Examples C1 & C2

1 mmol DKP was mixed with 2 ml of DMF (dimethyl formamide) and cooled down to 0 °C under nitrogen.

Then, 2.2 mmol (170 µl) of CISO₂CH₃ (= "MsCl") were added dropwise in case of Comparative Example **C1.**

In Comparative Example **C2,** 3.0 mmol (240 µl) of CISO₂CH₃ (= "MsCl") were added dropwise. The reaction mixture was stirred for 1 hour at 0 °C followed, by 12 hours at 25 °C.

### 4.1.2 Comparative Examples C3 & C4

1 mmol DKP was mixed with 2 ml of THF (tetrahydrofuran) and cooled down to 0 °C under nitrogen.

Then, 2 mmol of triethyl amine (= "Et₃N") and 2.2 mmol (170 µl) of CISO₂CH₃ (= "MsCl") were added dropwise in case of Comparative Example **C1.**

In Comparative Example **C2,** 1.1 mmol of triethyl amine and 1.1 mmol (85 µl) of CISO₂CH₃ were added dropwise.

The reaction mixture was stirred for 1 hour at 0 °C followed, by 12 hours at 25 °C.

### 4.1.3 Comparative Examples C5

1 mmol DKP was mixed with 2 ml of DMF and cooled down to 0 °C under nitrogen.

Then, 12 mmol of pyridine and 6.0 mmol (470 µl) of CISO₂CH₃ (= "MsCl") were added dropwise. The reaction mixture was stirred for 1 hour at 0 °C followed, by 12 hours at 25 °C.

### 4.1.4 Results

The reaction conditions of Comparative Examples **C1** to **C5** and the results are summarized in the following table:

| **Example** | **DKP** | **Solvent** | **Catalyst** | **MsCl** | **product** |
|---|---|---|---|---|---|
| **C1** | 1 mmol | 2 ml DMF | none | 170 µl (2.2 mmol) | tricyclus |
| **C2** | 1 mmol | 2 ml DMF | none | 240 µl (3.0 mmol) | tricyclus |
| **C3** | 1 mmol | 2 ml THF | 2.0 mmol Et₃N | 170 µl (2.2 mmol) | tricyclus |
| **C4** | 1 mmol | 2 ml THF | 1.1 mmol Et₃N | 85 µl (1.1 mmol) | tricyclus |
| **C5** | 1 mmol | 2 ml DMF | 12.0 mmol pyridine | 470 µl (6.0 mmol) | tricyclus |

No product corresponding to DKP-Y, wherein Y = -OSO₂CH₃ was observed during the reactions in Comparative Example **C1** to **C5,** during monitoring of each reaction via LC-MS.

Instead, in each example, NMR and LC-MS showed that the main product was a the following tricyclus:

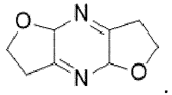

### 4.2 Inventive Examples I1 & I2: synthesis of L-homoserine hydantoin mesylate (VI), step (i)

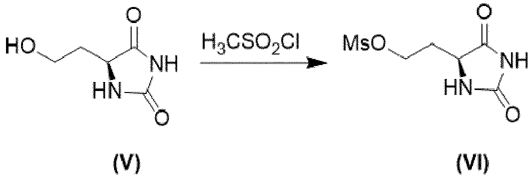

### 4.2.1 Inventive example I1

1 mmol of L-homoserine hydantoin according to structure **(V)** was mixed with 6 ml of THF and cooled down to 0 °C under nitrogen. Afterwards, 1.1 mmol Et₃N and 1.1 mmol (85 µl) of MsCI were added dropwise. The reaction was stirred for 1 hour at 0 °C. The reaction product of structure **(VI)** was isolated via extraction (H₂O/EtOAc). The isolated product was proven via NMR and LC-MS. The yield of compound **(VI)** was 91 %.

### 4.2.2 Inventive example I2

Inventive Example **I2** was repeated, except that instead of 6 ml THF, 6 ml of ethyl acetate (= "EtOAc") were used as the solvent. The yield of compound **(VI)** was 34 %.

### 4.3 Inventive Examples I3 - I6: reaction of L-homoserine hydantoin mesylate (VI) with DEMP, step (ii)

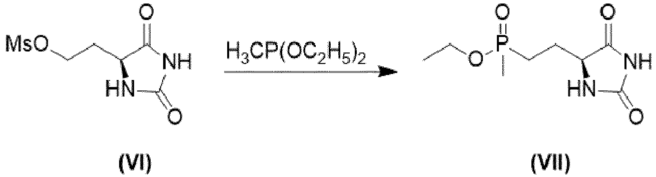

### 4.3.1 Inventive example I3

1 mmol L-homoserine hydantoin mesylate **(VI)** (= "Hyd-OMs") was placed in a glass flask under nitrogen at 25 °C. 2 mmol of methyl diethoxy phosphine ["DEMP"; CAS-No. 15715-41-0] were introduced. Afterwards the reaction mixture was heated to 140 °C for 4 hours. The resulting mixture was directly purified by column chromatography (EtOAc/MeOH: 6/1). Compound **(VII)** was detected by chromatography [R_{f} = 0.35 (EtOAc/MeOH: 5/1)] and its structure was confirmed by LC-MS and NMR.

### 4.3.2 Inventive example I4

1 mmol L-homoserine hydantoin mesylate **(VI)** was placed in a glass flask under nitrogen at 25 °C. 0.2 mmol LiBr and 2 mmol of DEMP were introduced. Afterwards the reaction mixture was heated to 140 °C for 4 hours. The resulting mixture was directly purified by column chromatography (EtOAc/MeOH: 6/1). Compound **(VII)** was detected by chromatography [R_{f} = 0.35 (EtOAc/MeOH: 5/1)] and its structure was confirmed by LC-MS and NMR. The yield of compound **(VII)** was determined to be 11 %.

### 4.3.3 Inventive example I5

1 mmol L-homoserine hydantoin mesylate **(VI)** in 2 ml diglyme was placed in a glass flask under nitrogen at 25 °C. 0.2 mmol LiBr and 2 mmol DEMP were introduced. Afterwards the reaction mixture was heated to 140 °C for 4 hours. The resulting mixture was directly purified by column chromatography (EtOAc/MeOH: 6/1). Compound **(VII)** was detected by chromatography [R_{f} = 0.35 (EtOAc/MeOH: 5/1)] and its structure was confirmed by LC-MS and NMR.

### 4.3.4 Inventive example I6

Inventive example **I5** was repeated, except that instead of 0.2 mmol LiBr, an equimolar amount of MgBr₂ was used.

### 4.3.5 Results

The reaction conditions of Inventive Examples **I3** to **I6** and the results are summarized in the following table:

| Example | Starting material | Additive/catalyst | solvent | Product |
|---|---|---|---|---|
| **I3** | **(VI)** | none | none | Yes |
| **I4** | **(VI)** | LiBr | none | Yes (11%) |
| **I5** | **(VI)** | LiBr | diglyme | Yes |
| **I6** | **(VI)** | MgBr₂ | diglyme | Yes |

### 4.4 Inventive Example I7: reaction of L-homoserine hydantoin mesylate (VI) with MPBE, step (ii)

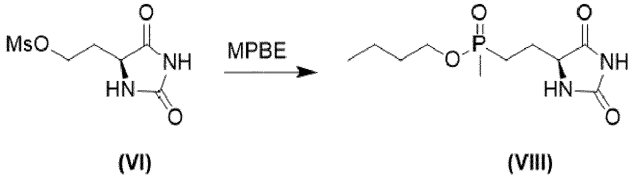

3 mmol NaH, dried DMF and 3 mmol *P*-methyl phosphinic acid butyl ester ("MPBE"; CAS-No.: 6172-80-1) were placed in a glass flask at room temperature under nitrogen and stirred for 1 hour. Then, 1 mmol of L-homoserine hydantoin mesylate **(VI)** was added as solution in DMF and the mixture was stirred for 24 hours at 25 °C. The resulting mixture was directly purified by column chromatography (EtOAc/MeOH: 6/1). Compound **(VIII)** was detected by chromatography [R_{f} = 0.35 (EtOAc/MeOH: 5/1)] and its structure was confirmed by LC-MS and NMR.

### 4.5 Inventive Example I8: reaction of N-BOC-L-homoserine methyl ester mesylate (IX) with MPBE, step (ii)

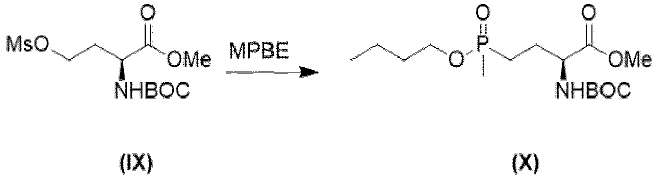

3 mmol NaH, dried DMF and 3 mmol P-methyl phosphinic acid butyl ester ("MPBE"; CAS-No.: 6172-80-1) were placed in a glass flask at room temperature under nitrogen and stirred for 1 hour. Then, 1 mmol of *N*-Boc-L-homoserine methyl ester **(IX)** (CAS-No.: 120042-11-7) was added as solution in DMF and the mixture was stirred for 24 hours at 25 °C. The resulting mixture was directly purified by column chromatography (EtOAc/MeOH: 6/1). Compound **(X)** was detected by chromatography [R_{f} = 0.35 (EtOAc/MeOH: 5/1)] and its structure was confirmed by LC-MS and NMR.

### 4.6 Results

Inventive Examples **I1** to **I8** show that a synthetic pathway to compounds according to structure **(I),** namely compounds according to structures **(VII), (VIII),** and **(X),** is surprisingly possible without the introduction of a halogen function into the substrate. This overcomes the difficulties of the prior art syntheses as disclosed in CN 108484666 A1, which, as shown in Comparative Examples **C1** to **C5,** does not give the desired intermediate, but produces the tricyclus, thus leading into an organosynthetic dead-end.

## Claims

1. Method for production of a compound according to formula (I): 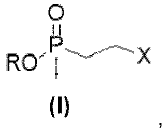 wherein R is alkyl, aryl, alkaryl, aralkyl,
and wherein X is selected from the following structures **(I-A), (I-B):** 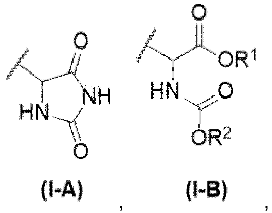 wherein R¹, R² are independently selected from the group consisting of alkyl, aryl, alkaryl, aralkyl,
wherein the method comprises the following steps (i), (ii):
(i) a compound according to formula (III) is reacted to give a compound according to formula (II): 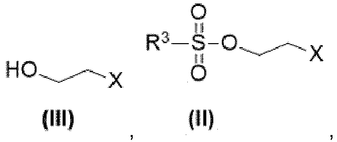 wherein R³ is alkyl, aryl, alkaryl, aralkyl, haloalkyl,
(ii) the compound according to formula **(II)** is reacted with a compound **(IV),** wherein the compound according to formula **(IV)** has a structure according to formula **(IV-A)** or formula **(IV-B),** to give a compound according to formula **(I):**

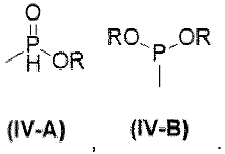

2. Method according to Claim 1, wherein R is alkyl or aryl.

3. Method according to Claim 1 or 2, wherein R¹, R² are independently selected from alkyl, aryl.

4. Method according to one of Claims 1 to 3, wherein R³ is selected from alkyl with 1 to 10 carbon atoms, haloalkyl with 1 to 10 carbon atoms, phenyl, alkaryl with 7 to 10 carbon atoms.

5. Method according to Claim 4, wherein R³ is selected from methyl, trifluoromethyl, tolyl.

6. Method according to one of Claims 1 to 5, wherein **(IV-A)** has a configuration according to the following structure **(I-A)_{L},** and wherein **(IV-B)** has a configuration according to the following structure **(I-B)_{L}:**

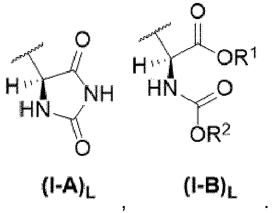

7. Method according to one of Claims 1 to 6, wherein in step (i), the compound according to formula **(III)** is reacted with a compound according to one of formulae **(XI), (XII):** 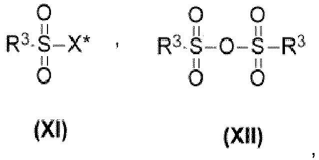 wherein X* is a halogen.

8. Method according to one of Claims 1 to 6, wherein step (i) is carried out in the presence of an organic solvent.

9. Method according to one of Claims 1 to 6, wherein step (i) is carried out in the absence of an organic solvent.

10. Method according to one of Claims 1 to 9, wherein step (i) is carried out in the presence of a base **B1.**

11. Method according to one of Claims 1 to 10, wherein step (ii) is carried out in the presence of an organic solvent.

12. Method according to one of Claims 1 to 10, wherein step (ii) is carried out in the absence of an organic solvent.

13. Method according to one of Claims 1 to 12, wherein step (ii) is carried out in the presence of a base **B2.**

14. Method according to one of Claims 1 to 13, wherein step (ii) is carried out in the presence of a catalyst.

15. Method according to one of Claims 1 to 14, wherein the compound **(I)** obtained in step (ii) is reacted to give glufosinate.
